# EUROPEAN PATENT SPECIFICATION

(11) **EP 4 202 200 B1**
(45) Date of publication and mention of the grant of the patent: **26.02.2025**
(21) Application number: 22020615.5
(22) Date of filing: 16.12.2022
(51) Int. Cl.: F02K 7/02, F02K 7/14, F02K 7/18, F02K 9/48, F02K 9/64, F23R 7/00, F02K 7/075

(54) **A ROCKET ENGINE WITH MULTI-STAGE COMBUSTION OF A MIXTURE OF PROPELLANTS**
RAKETENTRIEBWERK MIT MEHRSTUFIGER VERBRENNUNG EINER MISCHUNG VON TREIBSTOFFEN
MOTEUR-FUSÉE À COMBUSTION MULTI-ÉTAGES D'UN MÉLANGE D'ERGOLS

(30) Priority: 16.12.2021 PL 43987221
(43) Date of publication of application: 28.06.2023
(73) Proprietor: SIEC BADAWCZA LUKASIEWICZ-INSTYTUT LOTNICTWA, 02-256 Warszawa (PL)
(72) Inventor: Wolanski, Piotr, 02-765 Warszawa (PL); Kawalec, Michal, 02-679 Warszawa (PL)
(74) Representative: Malewska, Ewa

(56) References cited:
- GB-A- 2 468 515
- US-A- 5 873 240
- US-A- 6 003 301

## Description

The invention relates to a rocket engine with the multi-stage combustion of a mixture of propelants.

Currently, in some rocket engines using liquid propellants, the so-called staged combustion is employed, consisting in combustion taking place in two chambers: in a pre-chamber and then in the main chamber [1-4]. Most often, it is dictated by the fact that in the pre-chamber combustion takes place with a mixture composition far from the optimal, allowing however for a relatively low exhaust gas temperature. The temperature is low enough for the gases produced in the pre-chamber in result of combustion to have an acceptable temperature to power a turbine driving the pump(s) of propellants powering the engine (the pumps of one or both of the propellants mixture components).

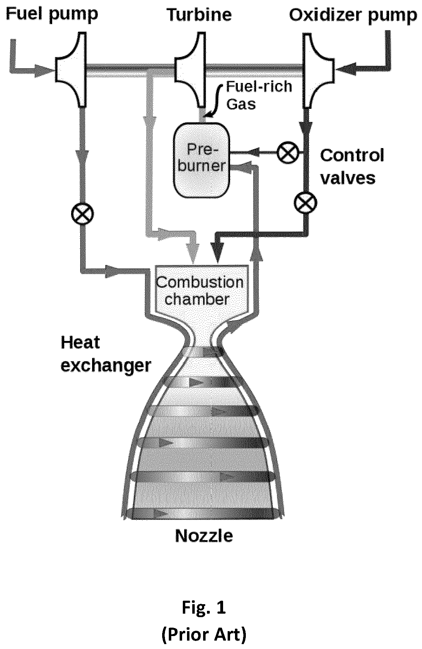

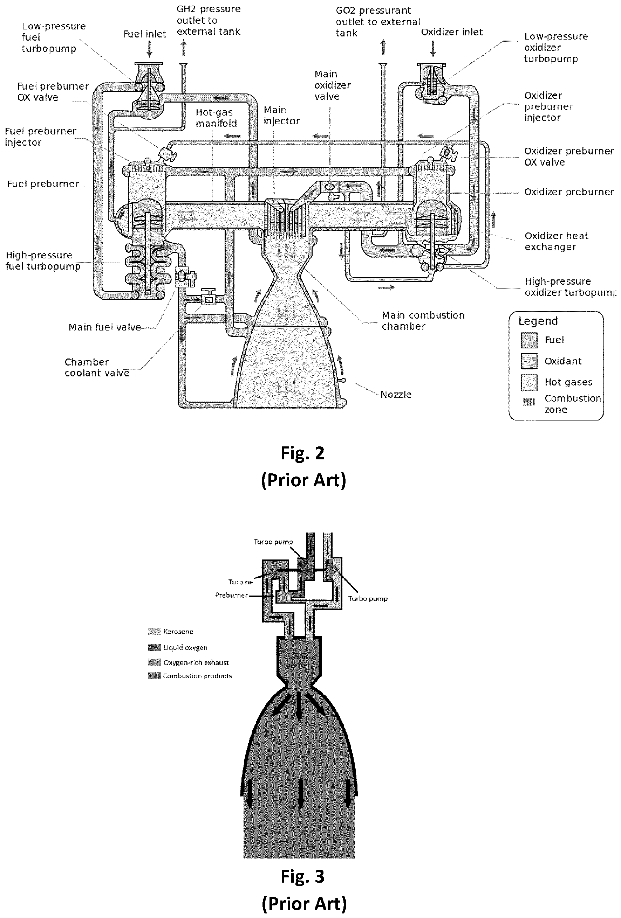

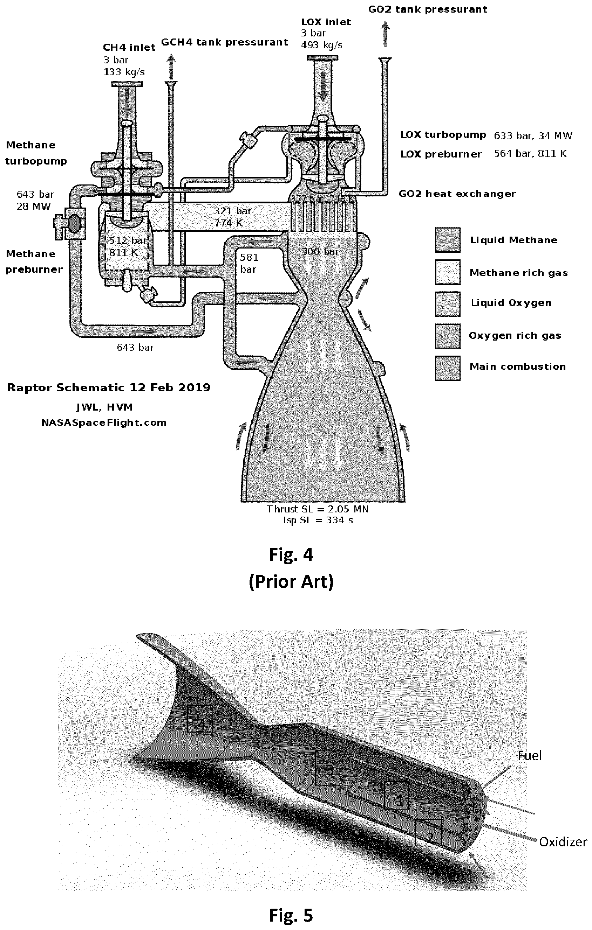

Three solutions are used in the prior art:
▪ In the first variant, both components of the propellant are combusted in the pre-chamber, however, with the composition significantly enriched in fuel. This variant was used in SSME engines (Space Shuttle Main Engine), where as a result of combustion with a large mixture of propellants with excess hydrogen, exhaust gases containing water vapor and gaseous hydrogen are produced, the temperature of which is acceptable for driving the turbines of the pumps of both propellants, because it does not burn through the turbine blades. A diagram of such a solution is shown in Fig. 1 and Fig. 2.
▪ In the second variant, combustion of a mixture of propellants enriched with oxidant takes place in the pre-chamber, as shown in Fig. 3.
▪ In the third variant, in one pre-chamber combustion of propellant components is used with the composition enriched in fuel, while in the other - with the composition enriched in oxidant, while the products from both pre-chambers are burnt in the main chamber, which is illustrated in Fig. 4.

Currently, among the solutions of rocket engines using staged combustion, the second variant is the most common, according to which in the pre-chamber or in two pre-chambers a mixture of propellants rich in oxidant, i.e. poor in fuel, is used. There are less numerous solutions in which combustion of a mixture of propellants with a composition rich in fuel, i.e. poor in oxidant, is used in the pre-chamber or in two pre-chambers. On the other hand, only a few currently developed engines use a system in which combustion of a propellant mixture of different compositions takes place in two pre-chambers: in one with an excess of fuel, and in the other - with an excess of oxidant. Such a solution is, for example, the "Raptor" engine shown in Fig. 4, using a mixture of liquid methane and liquid oxygen for propulsion.

In the Polish Patent Application No. P.439009 of September 22, 2021 disclosed is a pre-combustion chamber in liquid propellant rocket engines, in which detonation combustion takes place. Another rocket engine with multi-stage combustion is shown in GB 2 468 515 A.

The object of the invention is to provide a rocket engine with multi-stage combustion of a mixture of propellants, with increased efficiency, reduced size and more reliable construction.

Surprisingly, it has been found that the use of detonative combustion of the propellant mixture to produce a spinning detonation in at least one chamber of the staged combustion system allows the achievement of the stated objectives of the invention.

According to the invention, there is provided a rocket engine according to claim 1. The rocket engine is a multi-stage propellant combustor rocket engine having at least one pre-combustion chamber and a main combustion chamber, a system for supplying propellant mixture components to these chambers, including a fuel and oxidant pump, and an exhaust gas nozzle, according to the invention is characterized in that that it has at least one staged detonation chamber, including at least two preliminary detonation chambers, and at their outlet - a post-combustion chamber, where full mixing and afterburning of the detonation products from the pre-chambers takes place, and the exhaust gases are directed outside through a nozzle, preferably of the Aerospike type

According to the invention, in an individual staged detonation chamber, the preliminary detonation chambers are concentric and have a tubular, annular, disc or conical structure and operate in a spinning detonation mode. Preferably, the inner chamber has a tubular or conical structure.

According to the invention, in an individual staged detonation chamber, one of the two preliminary detonation chambers is supplied with a fuel-rich gas mixture through a collector, and a gaseous mixture with an oxidant-rich composition is supplied to the other of them, through another collector.

The rocket engine according to the invention has a deflagration afterburning chamber in the individual staged detonation chamber. Alternatively, the afterburning chamber is preferably a detonation chamber.

In the rocket engine of the invention, individual staged detonation chambers may be clustered with a common exhaust nozzle.

Preferably, the combustion products from the primary detonation chambers are directed to turbines driving the fuel and oxidizer pumps.

Thanks to the use of the solution according to the invention, a number of advantages have been achieved:
▪ it has been possible to reduce the number of cooled installations, and thus the weight of the system has been reduced compared to classical solutions;
▪ it was possible to power the rocket engine with mixtures of propellants - enriched in fuel and enriched in oxidant, with the resulting compositions ensuring maximum engine performance;
▪ the dimensions of the rocket engine with multi-stage combustion of the propellant mixture, as well as the mass of the engine, have been reduced compared to the previous state.

The present invention is explained below with reference to the drawing where:
- Fig. 1: is a schematic representation of a known two-stage propellants combustion engine where one turbine drives both liquid propellants pumps: fuel and oxidizer;
- Fig. 2: shows a diagram of a known SSME engine - model R-25, used as the main engine in the Space Shuttle; in this engine, in both preliminary chambers, the hydrogen-oxygen propellant mixture enriched in fuel, i.e. hydrogen, is combusted;
- Fig. 3: is a schematic representation of a known engine using one pre-chamber to power a turbine driving both liquid fuel and liquid oxidant pumps;
- Fig. 4: shows a diagram of the known "Raptor" engine, in which two pre-chambers are used: one burning a mixture rich in fuel - in the case of this engine the fuel is methane) and the other in which a combustible mixture rich in oxidant is combusted - in the case of this engine the engine's oxidant is oxygen;
- Fig. 5: shows a longitudinal section of a basic variant of the rocket engine according to the invention with a staged detonation chamber, where it is also possible to supply components of the propellant alternatively;
- Fig. 6: shows the rocket engine with a staged detonation chamber, shown in Fig. 5, with marked manifolds supplying the components of the propellant mixture;
- Fig. 7: illustrates the construction of a rocket engine according to the invention with a cluster of individual staged detonation chambers, with a common afterburning chamber and an Aerospike nozzle;
- Fig. 8: is a schematic diagram of the inventive conical rocket motor with staged detonation combustion;
- Fig. 9: shows the layout diagrams of staged detonation combustion chambers in rocket engines according to the invention with an Aerospike nozzle, where: Fig.9a) shows a fragment of the annular staged detonation combustion chamber; and Fig.9b) and Fig. 9c) show a variant with a cluster of individual pre-detonation chambers feeding combustion products to the Aerospike nozzle.

### Detailed description of the invention

In the drawings, Figs. 1 to 4 illustrate the prior art discussed in more detail in the introductory part of this description. Against the background of these known solutions, the present invention shown in Figures 5 to 9c reveals all its advantages.

In the classical liquid propellant rocket engine shown in Figs. 1 through Fig. 4, the pre-combustion chamber provides energy to drive the fuel and oxidizer pumps. In order to maintain the temperature of the pre-combustion products adjusted to the permissible operating conditions of the turbine supplying energy to the fuel pump and the oxidizer, a propellant mixture with a composition differing from the stoichiometric composition, in which the fuel or oxidant predominates, is subjected to combustion, so that the combustion exhausts only a part of the excess component without until the maximum temperature of the combustion products is reached. According to the state of the art, the pre-combustion products, after supplementing the composition of the propellant mixture to the optimum parameters from the point of view of combustion in the main chamber of the rocket engine, are post-combusted in its main chamber.

In the solution according to the present invention, the spinning detonation process was used in the initial chamber of the rocket engine, obtaining a higher efficiency of the combustion process, resulting from the increase in pressure (the so-called Pressure Gain Combustion), compared to the classic deflagration combustion.

According to the present invention, a staged detonation chamber is provided comprising at least two pre-chambers fed with different propellant mixtures - a fuel-rich mixture and an oxidant-rich mixture. These chambers are concentric to each other. In these chambers, incomplete combustion of the excess component takes place, as a result of which, at the exit of these chambers, a mixture of propellants of optimal composition is obtained, which is burnt in the post-combustion chamber located at the exit from the pre-combustion chambers. Exhaust gases leave the engine through the nozzle.

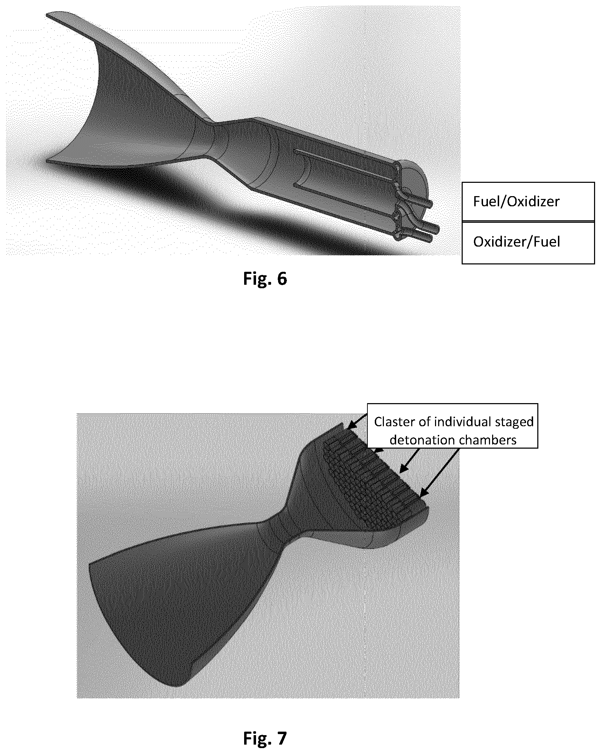

This basic variant of the rocket engine according to the invention with a staged detonation chamber is illustrated in Fig. 5, where the oxidant-rich mixture is burned in an internal tubular detonation chamber 1 surrounded by an annular detonation chamber 2, in which the fuel-rich mixture is burned. At the exit of these two concentric chambers 1 and 2, there is a cylindrical afterburner chamber 3, from which exhaust gases are discharged through a nozzle 4. Red arrows indicate the supply to the combustion chambers of fuel, and blue arrows - the supply of oxidant. It is also possible to alternately supply the components of the propellant, then in the detonation chamber 1 a mixture rich in fuel is burned, and in the external detonation chamber 2 - a mixture rich in oxidant. The collectors of propellant components are shown in Fig. 6, where the remaining elements of the rocket engine with a staged detonation chamber are identical to those shown in Fig. 5.

The afterburning chamber in a rocket engine with a staged detonation chamber according to the invention is a deflagration chamber or preferably a detonation chamber.

In Figure 7, a rocket engine according to the invention is shown having a cluster of individual staged detonation chambers as shown in Figures 5 and 6. Exhaust gases are discharged through a common nozzle.

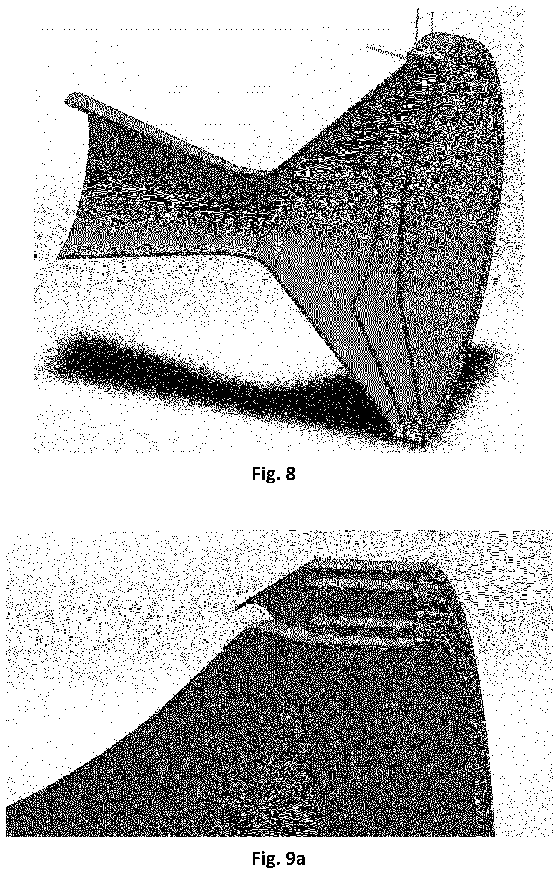

Another embodiment of the invention is shown in Fig. 8, which shows a diagram of the construction of a conical, staged detonation combustion rocket engine. The detonation chamber 1 is intended for combustion of a mixture of propellant components enriched in oxidant, and the detonation chamber 2 - a mixture of propellant components enriched in fuel. The afterburning chamber 3 is a classic (deflagration) or detonation chamber. The gases leave the engine through nozzle 4. The arrows indicate the supply of propellant components: red - fuel, blue - oxidizer.

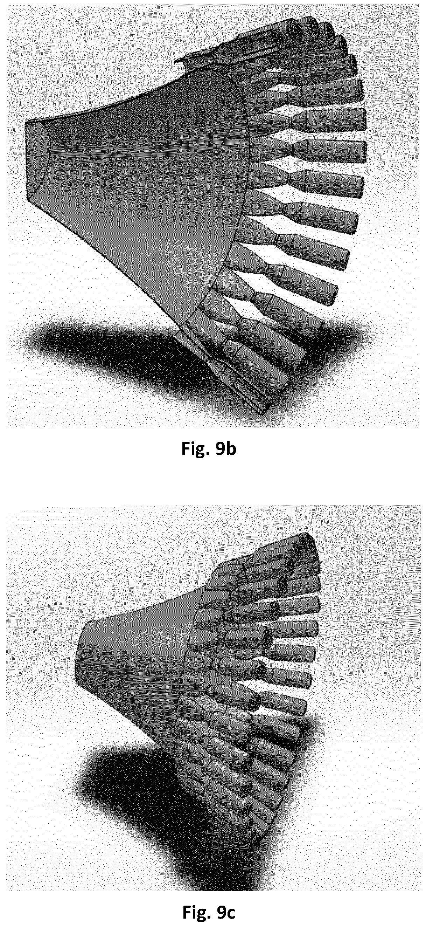

Fig. 9 presents diagrams of the construction of chambers of gradual detonation combustion in rocket engines with an Aerospike nozzle. The annular staged detonation combustor (Fig. 9a) has a detonation chamber 1 fed with an oxidant-rich mixture, a detonation chamber 2 fed with a fuel-rich mixture, a post-combustion chamber 3 being a conventional or detonation chamber. Nozzle 4 conducts a stream of exhaust gases over the outer surface of the Aerospike cone, which serves as one side of the virtual shield, while the other side is created by the air itself flowing around the moving rocket vehicle. When the air pressure changes with the flight altitude, the parameters of the virtual shield change. The engine automatically adjusts to altitude, compensating for the loss of engine power as altitude changes under various air pressure conditions, allowing the engine to maintain constant engine performance over a wide range of flight altitudes.

Also in this embodiment of the rocket engine according to the invention, variants with a cluster of individual staged detonation combustion chambers are provided (Fig. 9b and Fig. 9c), where the combustion products (exhaust gases) are discharged to the Aerospike nozzle.

In the rocket engine according to the invention, due to the very high energy density, the detonation chambers are much smaller and more compact, and as a result the engine is lighter. The use of the spinning detonation process makes it possible to improve the efficiency of the engine and increase the performance of rockets equipped with this type of turbine propulsion systems.

### Literature:

1. Sutton G. P., Biblarz O., Rocket propulsion elements, A Wiley-Interscience Publication JOHN WILEY & SONS, INC. New York / Chichester / Weinheim / Brisbane / Singapore / Toronto (7th ed. 2000);
2. https://en.wikipedia.org/wiki/Staged_combustion_cycle ;
3. Wolański P., "Detonative Propulsion", Proceedings of the Combustion Institute, 34, pp.125-158, Elsevier (2013);
4. Wolański P. (Ed.), "Research on detonative propulsion in Poland", Institute of Aviation Scientific Publication No. 60, Warsaw: tukasiewicz Research Network - Institute of Aviation, 2021. ISBN 978-83-63539-45-0.

## Claims

1. A rocket engine with the multi-stage combustion of a mixture of propellants, having at least one pre-combustion chamber and a main combustion chamber, a propellant mixture supply system to these chambers, including a fuel and oxidizer pumps, and an exhaust gas nozzle, **characterized in that** it has at least one staged detonation chamber, including at least two preliminary detonation chambers (1, 2), and at their outlet, a post-combustion chamber (3), where full mixing and post-combustion of detonation products from the pre-chambers (1, 2) takes place, and exhaust gases are directed outside through a nozzle (4), preferably of the Aerospike type.

2. The rocket engine according to claim 1, **characterized in that** in an individual staged detonation chamber, the preliminary detonation chambers (1, 2) are concentric and have a tubular, annular, disc or conical structure and operate in the rotating detonation mode.

3. The rocket engine according to claim 2, **characterized in that** an inner chamber of the individual staged detonation chamber has a tubular or conical structure.

4. The rocket engine according to claim 1 or 2, **characterized in that** in the individual staged detonation chamber, one of the two preliminary detonation chambers (1, 2) is supplied with a fuel-rich gas mixture through a collector, and the second one through another collector, with an oxidant-rich gas mixture.

5. The rocket engine according to claim 1, **characterized in that** it has the post-combustion chamber (3) in the individual staged detonation chamber.

6. The rocket engine according to claim 1, **characterized in that** the post-combustion chamber (3) is a detonation chamber.

7. The rocket engine according to claim 1, **characterized in that** the individual staged detonation chambers are connected in clusters with the nozzle (4).

8. The rocket engine according to claim 1, **characterized in that** the combustion products from the preliminary detonation chambers (1, 2) are directed to the turbines driving the fuel and oxidizer pumps.

## Patentansprüche

1. Raketentriebwerk mit mehrstufiger Verbrennung eines Treibmittelgemisches, das mindestens eine Vorbrennkammer und eine Hauptbrennkammer, ein System der Treibmittelgemischversorgung für diese Kammern, einschließlich einer Kraftstoffpumpe und einer Oxidationsmittelpumpe, und eine Abgasdüse aufweist, **dadurch gekennzeichnet, dass** es mindestens eine stufenweise Detonationskammer hat, die mindestens zwei Vordetonationskammern (1, 2) und an deren Auslass eine Nachbrennkammer (3) umfasst, in der eine vollständige Durchmischung und Nachverbrennung der Detonationsprodukte aus den Vordetonationskammern (1, 2) erfolgt und Abgase durch eine Düse (4), vorzugsweise vom Typ Aerospike, nach außen geleitet werden.

2. Raketentriebwerk nach Anspruch 1, **dadurch gekennzeichnet, dass** in einer einzelnen stufenweisen Detonationskammer die Vordetonationskammern (1, 2) konzentrisch sind und eine röhrenförmige, ringförmige, scheibenförmige oder konische Struktur aufweisen und im rotierenden Detonationsmodus arbeiten.

3. Raketentriebwerk nach Anspruch 2, **dadurch gekennzeichnet, dass** eine Innenkammer der einzelnen stufenweisen Detonationskammer eine röhrenförmige oder konische Struktur aufweist.

4. Raketentriebwerk nach Anspruch 1 oder 2, **dadurch gekennzeichnet, dass** in der einzelnen stufenweisen Detonationskammer eine der beiden Vordetonationskammern (1, 2) über einen Sammler mit einem brennstoffreichen Gasgemisch versorgt wird wahrend die andere Vordetonationskammer - über einen anderen Sammler - mit einem oxidationsmittelreichen Gasgemisch versorgt wird.

5. Raketentriebwerk nach Anspruch 1, **dadurch gekennzeichnet, dass** es sich in der einzelnen stufenweisen Detonationskammer die Nachbrennkammer (3) befindet.

6. Raketentriebwerk nach Anspruch 1, **dadurch gekennzeichnet, dass** die Nachbrennkammer (3) eine Detonationskammer ist.

7. Raketentriebwerk nach Anspruch 1, **dadurch gekennzeichnet, dass** die einzelnen stufenweisen Detonationskammern in Clustern mit der Düse (4) verbunden sind.

8. Raketentriebwerk nach Anspruch 1, **dadurch gekennzeichnet, dass** die Verbrennungsprodukte aus den Vordetonationskammern (1, 2) zu den Turbinen geleitet werden, die die Kraftstoffpumpe und die Oxidationsmittelpumpe antreiben.

## Revendications

1. Moteur-fusée à combustion multi-étages d'un mélange de propergols, comportant au moins une chambre de précombustion et une chambre de combustion principale, un système d'alimentation en mélange de propergols de ces chambres, comprenant des pompes à carburant et à comburant, et une tuyère de gaz d'échappement, **caractérisé en ce qu'**il comporte au moins une chambre de détonation étagée, comprenant au moins deux chambres de pré-détonation (1, 2), et à leur sortie, une chambre de postcombustion (3), où se déroule le mélange complet et la postcombustion des produits de détonation des chambres de pré-détonation (1, 2), et les gaz d'échappement sont dirigés vers l'extérieur par une tuyère (4), de préférence de type Aerospike.

2. Moteur-fusée selon la revendication 1, **caractérisé en ce que** dans une chambre de détonation étagée individuelle, les chambres de pré-détonation (1, 2) sont concentriques et présentent une structure tubulaire, annulaire, discale ou conique et fonctionnent en mode de détonation rotative.

3. Moteur-fusée selon la revendication 2, **caractérisé en ce qu'**une chambre intérieure de la chambre de détonation étagée individuelle présente une structure tubulaire ou conique.

4. Moteur-fusée selon la revendication 1 ou 2, **caractérisé en ce que** dans la chambre de détonation étagée individuelle, l'une des deux chambres de pré-détonation (1, 2) est alimentée par un mélange gazeux riche en carburant via un collecteur, et la seconde chambre par un mélange gazeux riche en oxydant via un autre collecteur.

5. Moteur-fusée selon la revendication 1, **caractérisé en ce qu'**il comporte la chambre de postcombustion (3) dans la chambre de détonation étagée individuelle.

6. Moteur-fusée selon la revendication 1, **caractérisé en ce que** la chambre de postcombustion (3) est une chambre de détonation.

7. Moteur-fusée selon la revendication 1, **caractérisé en ce que** les chambres de détonation étagées individuelles sont reliées en groupes à la tuyère (4).

8. Moteur-fusée selon la revendication 1, **caractérisé en ce que** les produits de combustion issus des chambres de pré-détonation (1, 2) sont dirigés vers les turbines entraînant la pompe à carburant et la pompe à comburant.
